# EUROPÄISCHE PATENTSCHRIFT

(11) **EP 2 373 705 B1**
(45) Veröffentlichungstag und Bekanntmachung des Hinweises auf die Patenterteilung: **27.03.2013**
(21) Anmeldenummer: 09760520.8
(22) Anmeldetag: 25.11.2009
(51) Int. Cl.: C08F 216/14, C04B 16/04

(54) **SÄUREBAUSTEINE UND VERSCHIEDENARTIGE POLYETHERBAUSTEINE ENTHALTENDES COPOLYMER**
COPOLYMER CONTAINING ACID BUILDING BLOCKS AND VARIOUS TYPES OF POLYETHER BUILDING BLOCKS
ÉLÉMENT STRUCTURAL D'ACIDE ET COPOLYMÈRE CONTENANT DES ÉLÉMENTS STRUCTURAUX POLYÉTHER DE DIFFÉRENTS TYPES

(30) Priorität: 08.12.2008 EP 08170968
(43) Veröffentlichungstag der Anmeldung: 12.10.2011
(73) Patentinhaber: Construction Research & Technology GmbH, 83308 Trostberg (DE)
(72) Erfinder: FLAKUS, Silke, 85560 Ebersberg (DE); LORENZ, Klaus, 84539 Zangberg (DE); MACK, Helmut, 83278 Traunstein (DE); SCHOLZ, Christian, 84518 Wald an der Alz (DE); WAGNER, Petra, 83308 Trostberg (DE); WIMMER, Barbara, 83342 Tacherting (DE); HARTL, Angelika, 83342 Emertsham (DE); WINKLBAUER, Martin, 84553 Halsbach (DE); BICHLER, Manfred, 84549 Engelsberg (DE)
(86) Internationale Anmeldenummer: PCT/EP2009/065786
(87) Internationale Veröffentlichungsnummer: WO 2010/076093

(56) Entgegenhaltungen:
- EP-A1- 1 690 877
- WO-A2-2005/075529

## Beschreibung

Die vorliegende Erfindung betrifft ein Copolymer, ein Dispergiermittel, die Herstellung des Copolymers und des Dispergiermittels sowie die Verwendung des Copolymers.

Es ist bekannt, dass man wässrigen Aufschlämmungen von pulverförmigen anorganischen oder organischen Substanzen, wie Tonen, Silikatmehl, Kreide, Ruß, Gesteinsmehl und hydraulischen Bindemitteln zur Verbesserung ihrer Verarbeitbarkeit, d. h. Knetbarkeit, Streichfähigkeit, Spritzbarkeit, Pumpbarkeit oder Fließfähigkeit, oft Zusatzmittel in Form von Dispergiermitteln zusetzt. Derartige Zusatzmittel sind in der Lage, die Bildung von Feststoffagglomeraten zu verhindern, die bereits vorhandenen und durch Hydratation neu gebildeten Teilchen zu dispergieren und auf diese Weise die Verarbeitbarkeit zu verbessern. Dieser Effekt wird insbesondere auch gezielt bei der Herstellung von Baustoffmischungen, die hydraulische Bindemittel wie Zement, Kalk, Gips, Halbhydrat oder Anhydrit enthalten, ausgenutzt.

Um diese Baustoffmischungen auf der Basis der genannten Bindemittel in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Betonkörper führt zu signifikant verschlechterten mechanischen Festigkeiten und Beständigkeiten.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im Allgemeinen als Wasserreduktions- oder Fließmittel bezeichnet werden. Als derartige Mittel werden in der Praxis insbesondere Copolymere eingesetzt, welche durch radikalische Copolymerisation von Säuremonomeren und/oder Säurederivatmonomeren mit Polyethermakromonomeren hergestellt werden.

In der WO 2005/075529 werden Copolymere beschrieben, welche neben Säuremonomer-Struktureinheiten als Polyethermakromonomer-Struktureinheiten Vinyloxybutylen-poly(ethylenglykol)-Struktureinheiten aufweisen. Derartige Copolymertypen sind als Hochleistungsfließmittel weit verbreitet, da diese vorzügliche Anwendungseigenschaften aufweisen.

Obwohl die beschriebenen Copolymere als wirtschaftliche Hochleistungsfließmittel anzusehen sind, besteht weiterhin ein Bestreben, die Qualität und die Wirtschaftlichkeit der Copolymere noch weiter zu verbessern.

Die der vorliegenden Erfindung zugrunde liegende Aufgabe ist es somit, ein wirtschaftliches Dispergiermittel für hydraulische Bindemittel bereitzustellen, welches sich insbesondere gut als Fließmittel für Beton eignet.

Die Lösung dieser Aufgabe ist ein Copolymer aufweisend
i) 3 bis 40 Mol-% einer Isoprenolpolyetherderivat-Struktureinheit α,
ii) 3 bis 40 Mol-% einer Vinyloxypolyetherderivat-Struktureinheit β und
iii) 35 bis 93 Mol-% einer Säure-Struktureinheit γ,
wobei die Isoprenolpolyetherderivat-Struktureinheit α durch folgende allgemeine Formel (la) repräsentiert wird 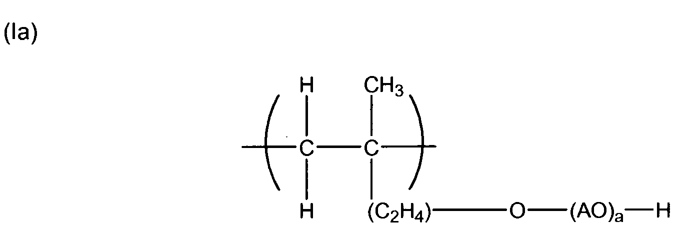 mit
A gleich oder verschieden sowie repräsentiert durch eine Alkylengruppe gemäß CₓH₂ₓ mit x = 2, 3, 4 oder 5, sowie
a gleich oder verschieden und repräsentiert durch eine ganze Zahl zwischen 4 und 300,
die Vinyloxypolyetherderivat-Struktureinheit β durch folgende allgemeine Formel (Ib) repräsentiert wird 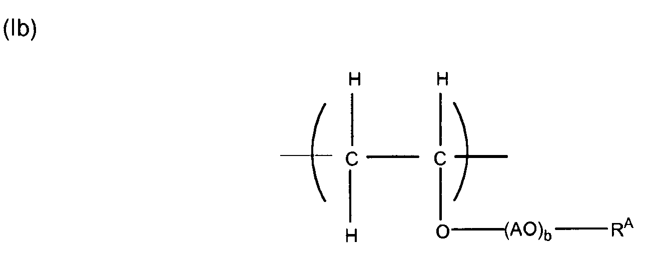 mit R^{A} gleich oder verschieden sowie repräsentiert durch ein Wasserstoffatom, eine lineare oder verzweigte C₁-C₁₂ Alkylgruppe, C₅-C₈ Cycloalkylgruppe, Phenylgruppe oder C₇-C₁₂ Arylalkylgruppe,
A gleich oder verschieden sowie repräsentiert durch eine Alkylengruppe gemäß CₓH₂ₓ mit x = 2, 3, 4 oder 5, sowie
b gleich oder verschieden sowie repräsentiert durch eine ganze Zahl von 6 - 450,
wobei die arithmetisch mittlere Anzahl der Alkylengruppen A der Struktureinheiten, welche der Vinyloxypolyetherderivat-Struktureinheit β zugehören um mindestens den Faktor 1,5 höher ist als die arithmetisch mittlere Anzahl der Alkylengruppen A der Struktureinheiten, welche der Isoprenolpolyetherderivat-Struktureinheit α zugehören.

Die Struktureinheiten des Copolymers, welche der Säure-Struktureinheit γ zugehören, werden durch Einpolymerisation von entsprechenden Säuremonomeren erzeugt. In diesem Zusammenhang sollen als Säuremonomer radikalisch copolymerisierbare, mindestens eine Kohlenstoffdoppelbindung aufweisende Monomere verstanden werden, welche mindestens eine Säurefunktion enthalten und im wässrigen Medium als Säure reagieren. Weiterhin sollen als Säuremonomer auch radikalisch copolymerisierbare, mindestens eine Kohlenstoffdoppelbindung aufweisende Monomere verstanden werden, welche aufgrund von Hydrolysereaktion im wässrigen Medium mindestens eine Säurefunktion ausbilden und im wässrigen Medium als Säure reagieren (Beispiel: Maleinsäureanhydrid oder basisch hydrolysierbare Ester wie Ethylacrylat).

Allgemein kann gesagt werden, dass die Wirkungsweise von relevanten Polyethermakromonomerstruktureinheiten sowie Säurestruktureinheiten aufweisenden Copolymeren von deren strukturellen Parametern bestimmt wird. Das Wirkungsspektrum von entsprechenden Hochleistungscopolymeren deckt die gesamte Bandbreite von extremer Wasserreduktion bis zu extremem Slumperhalt ab, wobei strukturelle Parameter, die für Wasserreduktion sorgen, einem guten Slumperhalt entgegenstehen. So ist neben der Ladungsmenge pro Masseneinheit auch die Länge der Seitenketten, z.B. bezüglich der Wasserreduktionsfähigkeit, ausschlaggebend. Für die jeweilige praktische Anwendung ist häufig ein "Kompromiss" bezüglich der Wahl von kurzen und langen Seitenketten optimal, wobei erkannt wurde, dass Mischungen aus kurzen und langen Seitenketten in dieser Hinsicht meist die beste Lösung bieten. Die vorliegende Erfindung verwirklicht, wie derartige Mischungen wirtschaftlich und qualitativ hochwertig bereitgestellt werden. Die Polyethermakromonomerstruktureinheiten, welche vom Vinyloxypolyethertyp sind, lassen sich aufgrund der höheren Reaktivität des entsprechenden Monomers leichter mit langen Polyetherseitenketten einpolymerisieren (also auch leichter mit einem geringen Restmonomergehalt) als vergleichsweise die Polyethermakromonomerstruktureinheiten, welche vom Isoprenolpolyethertyp sind. Monomere des Isoprenolpolyethertyps, welche verhältnismäßig kurze Seitenketten aufweisen, lassen sich jedoch (mit geringem Restmonomergehalt) ebenfalls gut einpolymerisieren, wobei diese Monomere des Isoprenolpolyethertyps als besonders kostengünstig verfügbare Ausgangsstoffe zur Verfügung stehen. Zusammenfassend kann gesagt werden, dass das erfindungsgemäße Copolymer ein qualitativ hochwertiges und besonders wirtschaftliches Dispergiermittel für hydraulische Bindemittel darstellt.

In der Regel ist die arithmetisch mittlere Anzahl der Alkylengruppen A der Struktureinheiten, welche der Vinyloxypolyetherderivat-Struktureinheit β zugehören, um mindestens den Faktor 2 höher als die arithmetisch mittlere Anzahl der Alkylengruppen A der Struktureinheiten, welche der Isoprenolpolyetherderivat-Struktureinheit α zugehören.

Meist ist a gleich oder verschieden und wird durch eine ganze Zahl zwischen 5 und 70 repräsentiert, wobei b gleich oder verschieden ist und repräsentiert wird durch eine ganze Zahl von 41 - 400.

Oft ist a gleich oder verschieden und wird repräsentiert durch eine ganze Zahl zwischen 5 und 39.

Bevorzugt weist das erfindungsgemäße Copolymer auf
i) 5 bis 35 Mol-% einer Isoprenolpolyetherderivat-Struktureinheit α,
ii) 5 bis 35 Mol-% einer Vinyloxypolyetherderivat-Struktureinheit β und
iii) 50 bis 90 Mol-% einer Säure-Struktureinheit γ.

In der Regel wird die Vinyloxypolyetherderivat-Struktureinheit β durch Einpolymerisation von alkoxyliertem Hydroxybutylvinylether, welcher bevorzugt eine arithmetisch mittlere Zahl an Oxyalkylengruppen von 41 bis 400 aufweist, erzeugt.

In einer bevorzugten Ausführungsform liegt die Säure-Struktureinheit γ gemäß einer der allgemeinen Formeln (IIa), (IIb), (IIc) und/oder (IId) vor 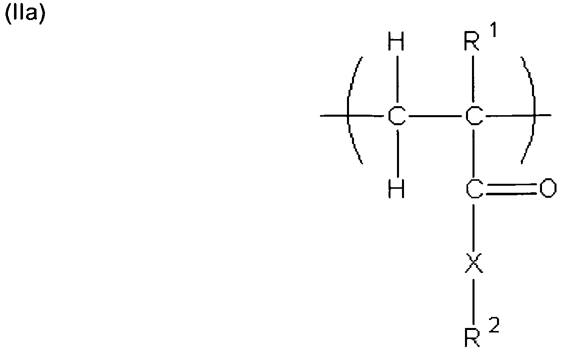 mit
R¹ gleich oder verschieden sowie repräsentiert durch H und/oder eine unverzweigte oder verzweigte C₁ - C₄ Alkylgruppe;
X gleich oder verschieden sowie repräsentiert durch NH-(CₙH₂ₙ) mit n = 1, 2, 3 oder 4 und/oder O-(CₙH₂ₙ) mit n = 1, 2, 3 oder 4 und/oder durch eine nicht vorhandene Einheit;
R² gleich oder verschieden sowie repräsentiert durch OH, SO₃H, PO₃H₂, O-PO₃H₂ und/oder para substituiertes C₆H₄-SO₃H, mit der Maßgabe, dass falls X eine nicht vorhandene Einheit ist, R² durch OH repräsentiert wird; 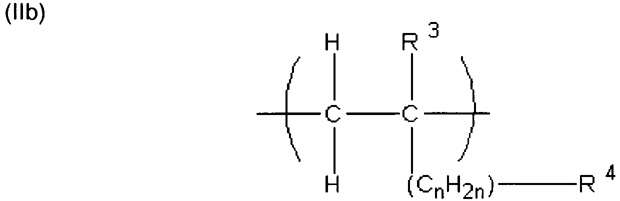 mit
R³ gleich oder verschieden sowie repräsentiert durch H und/oder eine unverzweigte oder verzweigte C₁ - C₄ Alkylgruppe;
n = 0, 1, 2, 3 oder 4
R⁴ gleich oder verschieden sowie repräsentiert durch SO₃H, PO₃H₂, O-PO₃H₂ und/oder para substituiert vorliegendes C₆H₄-SO₃H; 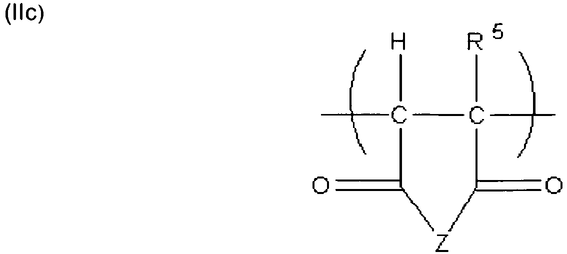 mit
R⁵ gleich oder verschieden sowie repräsentiert durch H und/oder eine unverzweigte oder verzweigte C₁ - C₄ Alkylgruppe;
Z gleich oder verschieden sowie repräsentiert durch O und/oder NH; 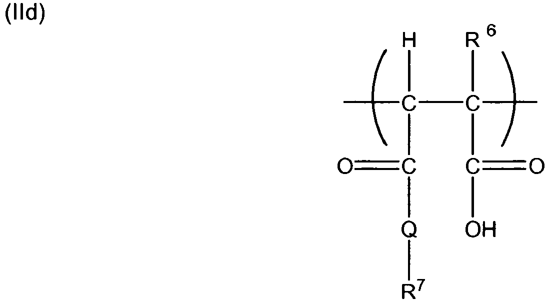 mit
R⁶ gleich oder verschieden sowie repräsentiert durch H und/oder eine unverzweigte oder verzweigte C₁ - C₄ Alkylgruppe;
Q gleich oder verschieden sowie repräsentiert durch NH und/oder O;
R⁷ gleich oder verschieden sowie repräsentiert durch H, (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und/oder (CₘH₂ₘ)ₑ-O-(A'O)_{α} -R⁹ mit m = 0, 1, 2, 3 oder 4, e = 0, 1, 2, 3 oder 4, A' = C_{x'}H_{2x'} mit x' = 2, 3, 4 oder 5 und/oder CH₂C(C₆H₅)H-, α = eine ganze Zahl von 1 bis 350 mit R⁹ gleich oder verschieden sowie repräsentiert durch eine unverzweigte oder verzweigte C₁ - C₄ Alkylgruppe.

Häufig wird die Säure-Struktureinheit γ durch Einpolymerisation der Säuremonomere Methacrylsäure, Acrylsäure, Maleinsäure und/oder Maleinsäureanhydrid erzeugt.

Je nach pH-Wert kann die Säure-Struktureinheit γ auch in deprotonierter Form als Salz vorliegen, wobei dann als Gegenionen Na⁺, K⁺ sowie Ca²⁺ typisch sind.

Meist liegen in dem erfindungsgemäßen Copolymer mindestens 45 Mol-%, bevorzugt mindestens 80 Mol-% aller Struktureinheiten als Isoprenolpolyetherderivat-Struktureinheit α, Vinyloxypolyetherderivat-Struktureinheit β und Säure-Struktureinheit γ vor.

Die Erfindung betrifft auch ein Dispergiermittel enthaltend mindestens 30 Gew.-% Wasser sowie mindestens 10 Gew.-% des vorstehend beschriebenen Copolymers. Bevorzugt liegt das Dispergiermittel in Form einer wässrigen Lösung vor.

Außerdem betrifft die Erfindung ein Verfahren zur Herstellung des erfindungsgemäßen Copolymers oder des erfindungsgemäßen Dispergiermittels, wobei Isoprenolpolyetherderivatmonomer, Vinyloxypolyetherderivatmonomer und Säuremonmer durch radikalische Polymerisation unter Verwendung eines Peroxid enthaltenden Redoxinitiatorsystems in wässriger Lösung umgesetzt werden und die Temperatur der wässrigen Lösung während der Polymerisation 10 bis 45 °C sowie der pH-Wert 3,5 bis 6,5 beträgt.

Schließlich betrifft die vorliegende Erfindung die Verwendung des erfindungsgemäßen Copolymers als Dispergiermittel für hydraulische Bindemittel und/oder für latenthydraulische Bindemittel. Das erfindungsgemäße Copolymer kann beispielsweise auch (insbesondere in entwässerter Form) als Additiv für die Zementproduktion (Mahlhilfe und "Wasserreduzierer" für reine Portlandzemente bzw. Kompositzemente) eingesetzt werden.

Nachstehend soll die Erfindung anhand von Ausführungsbeispielen näher erläutert werden.

### Synthesebeispiel 1

Ein Glasreaktor ausgestattet mit mehreren Zulaufmöglichkeiten, Rührer und pH-Elektrode wurde mit 285 g Wasser, 210 g Vinyloxybutylpolyethylenglycol-3000 (hergestellt durch Ethoxylierung von Hydroxybutylvinylether mit 66 mol EO) und 23,3 g I-soprenylpolyethylenglycol-500 (hergestellt durch Ethoxylierung von 3-methyl-3-buten-1-ol mit 10 mol EO) beschickt (Lösung A) und auf 13 °C temperiert. 35 % einer zweiten vorbereiteten, teilneutralisierten Lösung (Lösung B), bestehend aus 50 g Wasser und 25,4 g Acrylsäure (99 %) wurde über einen Zeitraum von 15 min in den Glasreaktor zu Lösung A gegeben. Weiterhin wurden 1,9 g 3-Mercaptopropionsäure in den Reaktor gegeben. Eine 3. Lösung (Lösung C), bestehend aus 5 g einer Mischung aus Natriumsulfit, dem Dinatriumsalz der 2-Hydroxy-2-sulfinatoessigsäure und dem Dinatriumsalz der 2-Hydroxy-2-sulfonatoessigsäure, (Brüggolit FF6 der Brüggemann GmbH) und 40 g Wasser wurde vorbereitet. Darauf wurden bei einer Temperatur von 13 °C 50 mg Eisen-(II)-sulfat-Heptahydrat, gelöst in einigen Tropfen Wasser, sowie 2,5 g 50 %ige Wasserstoffperoxidlösung zu Lösung A gegeben. Zeitgleich wurden über 45 Minuten die noch verbliebene Lösung B und über 60 Minuten Lösung C in die Lösung A dosiert. Zum Abschluss wurde mit 20 %iger Natriumhydroxid-Lösung neutralisiert.

Es wurde die wässrige Lösung eines Copolymers mit einem mittleren Molgewicht von Mw = 24300 g/mol (bestimmt durch GPC) und einem Feststoffgehalt von 39 % erhalten.

### Synthesebeispiel 2

Ein Glasreaktor ausgestattet mit mehreren Zulaufmöglichkeiten, Rührer und pH-Elektrode wurde mit 382 g Wasser, 263 g Vinyloxybutylpolyethylenglycol-3000 (hergestellt durch Ethoxylierung von Hydroxybutylvinylether mit 66 mol EO) und 96 g Isoprenylpolyethylenglycol-1100 (hergestellt durch Ethoxylierung von 3-methyl-3-buten-1-ol mit 22 mol EO) beschickt (Lösung A) und auf 13 °C temperiert. 35 % einer zweiten vorbereiteten, teilneutralisierten Lösung (Lösung B), bestehend aus 68 g Wasser und 63,6 g Acrylsäure (99 %) wurde über einen Zeitraum von 15 min in den Glasreaktor zu Lösung A gegeben. Weiterhin wurden 3,6 g 3-Mercaptopropionsäure in den Reaktor gegeben. Eine 3. Lösung (Lösung C), bestehend aus 10 g einer Mischung aus Natriumsulfit, dem Dinatriumsalz der 2-Hydroxy-2-sulfinatoessigsäure und dem Dinatriumsalz der 2-Hydroxy-2-sulfonatoessigsäure, (Brüggolit FF6 der Brüggemann GmbH) und 60 g Wasser wurde vorbereitet. Darauf wurden bei einer Temperatur von 13 °C 50 mg Eisen-(II)-sulfat-Heptahydrat, gelöst in einigen Tropfen Wasser, sowie 5 g 50 %ige Wasserstoffperoxidlösung zu Lösung A gegeben. Zeitgleich wurden über 45 Minuten die noch verbliebene Lösung B und über 60 Minuten Lösung C in die Lösung A dosiert. Zum Abschluss wurde mit 20 %iger Natriumhydroxid-Lösung neutralisiert.

Es wurde die wässrige Lösung eines Copolymers mit einem mittleren Molgewicht von Mw = 22400 g/mol (bestimmt durch GPC) und einem Feststoffgehalt von 41 % erhalten.

### Vergleichsbeispiel (Vgl.) - entsprechend zu den Herstellungsbeispielen

Käufliches Betonfließmittel MVA 1855 (BASF Construction Polymers GmbH) auf Basis eines Copolymerisats aus Vinyloxybutylenpoly(ethylenglykol) unterschiedlicher Kettenlänge, einer ethylenisch ungesättigten Carbonsäure und eines basisch hydrolysierbaren Vinylesters - das Polymer gemäß dem Vergleichsbeispiel weist gegenüber dem Copolymertyp 1 eine verwandte Polymerarchitektur auf.

Zur Bewertung der Copolymerlösungen wurden Mörteltests durchgeführt. Die experimentellen Durchführungen sind im Anwendungsbeispiel beschrieben. Bei den Tests sollte geprüft werden, ob die erfindungsgemäßen Copolymerlösungen unter den gleichen Testbedingungen (w/z-Wert, Temperatur, Zuschläge, etc.) bei gleicher oder geringerer Dosierung eine vergleichbar gute oder bessere Performance, d.h. die gleiche oder bessere Verflüssigung und einen vergleichbaren Slumperhalt zeigen.

### Anwendungsbeispiel / Durchführung der Mörteltests:

876,65 g Portlandzement (CEM I 42,5 R, Karlstadt) wurden mit 1350 g Normensand, 567,87 g Quarzsand und 350,66 g Wasser, welches die erfindungsgemäßen Produkte bzw. das Vergleichsprodukt in gelöster Form enthielt, angerührt. Unmittelbar nach der Herstellung der Mörtelmischung erfolgten die Bestimmung des Ausbreitmaßes sowie dessen zeitliche Veränderung über einen Zeitraum von 30 Minuten.

Die Ergebnisse der Prüfung sind nachstehend tabellarisch aufgeführt.

| Zusatzmittel | Feststoff [Gew.-%] | Dosierung [Gew.-%] | Fließmaß in cm nach | | |
|---|---|---|---|---|---|
| | | | 0 min. | 15 min. | 30 min. |
| Bsp.1 | 33,2 | 0,15 | 24,3 | 23,2 | 23 |
| Bsp.2 | 33,2 | 0,15 | 25 | 24 | 23 |
| Vgl. | 33,2 | 0,24 | 24,4 | 24 | 24 |
| w/z = 0,42; Zement: Karlstadt CEM I 425,5 R | | | | | |

### Gesamtfazit der Ergebnisse der Vergleichsversuche:

Die vorstehenden Versuche zeigen, dass die Qualität und die Wirtschaftlichkeit der Fließmittel auf Basis der die Erfindung betreffenden Copolymere aus den Synthesebeispielen 1 und 2 hervorragend im Vergleich zu dem sich bereits in der Praxis bewährten Hochleistungspolymer (Vgl.) sind. Gegenüber dem kommerziell erhältlichen Produkt zeigen die erfindungsgemäßen Copolymere deutliche wirtschaftliche Vorteile bei vergleichbar guter Performance. Die erfindungsgemäßen Copolymere erreichen das gleiche Fließmaß mit einer um 38 % verringerten Dosierrate und zeigen dennoch einen guten Slumperhalt. Dies zeigt, dass die Kombination einer langen Polyethermakromonomerstruktureinheit vom Vinyloxypolyethertyp mit einer kürzeren Polyethermakromonomerstruktureinheit vom besonders kostengünstigen Isoprenolpolyethertyp die Synthese qualitativ hochwertiger Polymere ermöglicht, mit denen sowohl eine hervorragende Wasserreduktion als auch ein guter Slumperhalt erzielt werden kann. Durch die Verwendung einer kostengünstigen Struktureinheit auf der einen Seite und durch die geringere Dosierrate auf der anderen Seite entstehen somit für die Praxis besonders wirtschaftliche und qualitativ hochwertige Polymere, die bedingt durch ihre Struktur ein universelles Anwendungsgebiet finden.

## Patentansprüche

1. Copolymer aufweisend
i) 3 bis 40 Mol-% einer Isoprenolpolyetherderivat-Struktureinheit α,
ii) 3 bis 40 Mol-% einer Vinyloxypolyetherderivat-Struktureinheit β und
iii) 35 bis 93 Mol-% einer Säure-Struktureinheit γ,
wobei die Isoprenolpolyetherderivat-Struktureinheit α durch folgende allgemeine Formel (la) repräsentiert wird 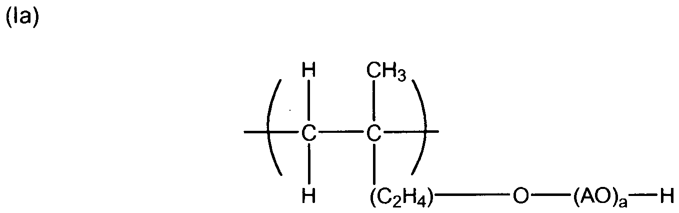 mit
A gleich oder verschieden sowie repräsentiert durch eine Alkylengruppe gemäß CₓH₂ₓ mit x = 2, 3, 4 oder 5, sowie
a gleich oder verschieden und repräsentiert durch eine ganze Zahl zwischen 4 und 300,
die Vinyloxypolyetherderivat-Struktureinheit β durch folgende allgemeine Formel (Ib) repräsentiert wird 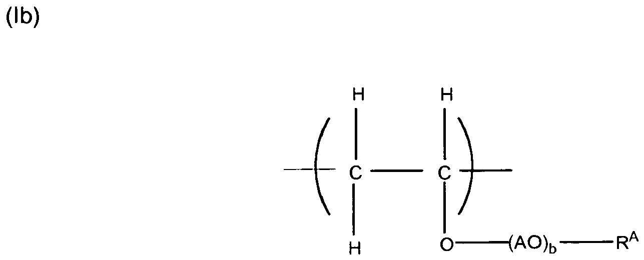 mit R^{A} gleich oder verschieden sowie repräsentiert durch ein Wasserstoffatom, eine lineare oder verzweigte C₁-C₁₂ Alkylgruppe, C₅-C₈ Cycloalkylgruppe, Phenylgruppe oder C₇-C₁₂ Arylalkylgruppe,
A gleich oder verschieden sowie repräsentiert durch eine Alkylengruppe gemäß CₓH₂ₓ mit x = 2, 3, 4 oder 5, sowie
b gleich oder verschieden sowie repräsentiert durch eine ganze Zahl von 6 - 450,
wobei die arithmetisch mittlere Anzahl der Alkylengruppen A der Struktureinheiten, welche der Vinyloxypolyetherderivat-Struktureinheit β zugehören um mindestens den Faktor 1,5 höher ist als die arithmetisch mittlere Anzahl der Alkylengruppen A der Struktureinheiten, welche der Isoprenolpolyetherderivat-Struktureinheit α zugehören.

2. Copolymer nach Anspruch 1, **dadurch gekennzeichnet, dass** die arithmetisch mittlere Anzahl der Alkylengruppen A der Struktureinheiten, welche der Vinyloxypolyetherderivat-Struktureinheit β zugehören, um mindestens den Faktor 2 höher ist als die arithmetisch mittlere Anzahl der Alkylengruppen A der Struktureinheiten, welche der Isoprenolpolyetherderivat-Struktureinheit α zugehören.

3. Copolymer nach Anspruch 1 oder 2, **dadurch gekennzeichnet, dass** a gleich oder verschieden ist und repräsentiert wird durch eine ganze Zahl zwischen 5 und 70, sowie b gleich oder verschieden ist und repräsentiert wird durch eine ganze Zahl von 41 - 400.

4. Copolymer nach einem der Ansprüche 1 bis 3, **dadurch gekennzeichnet, dass** a gleich oder verschieden ist und repräsentiert wird durch eine ganze Zahl zwischen 5 und 39.

5. Copolymer nach einem der Ansprüche 1 bis 4 aufweisend
i) 5 bis 35 Mol-% einer Isoprenolpolyetherderivat-Struktureinheit α,
ii) 5 bis 35 Mol-% einer Vinyloxypolyetherderivat-Struktureinheit β und
iii) 50 bis 90 Mol-% einer Säure-Struktureinheit γ.

6. Copolymer nach einem der Ansprüche 1 bis 5, **dadurch gekennzeichnet, dass** die Vinyloxypolyetherderivat-Struktureinheit β durch Einpolymerisation von alkoxyliertem Hydroxybutylvinylether, welcher bevorzugt eine arithmetisch mittlere Zahl an Oxyalkylengruppen von 41 bis 400 aufweist, erzeugt wird.

7. Copolymer nach einem der Ansprüche 1 bis 6, **dadurch gekennzeichnet, dass** die Säure-Struktureinheit γ gemäß einer der allgemeinen Formeln (IIa), (IIb), (IIc) und/oder (IId) vorliegt 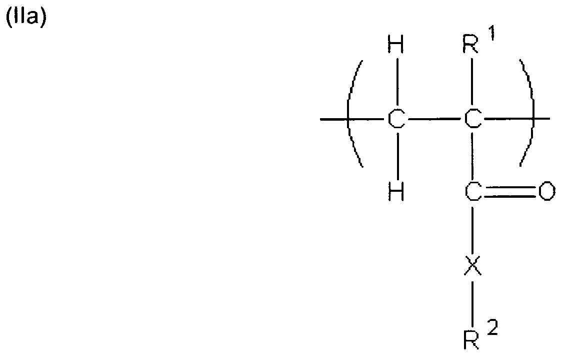 mit
R¹ gleich oder verschieden sowie repräsentiert durch H und/oder eine unverzweigte oder verzweigte C₁ - C₄ Alkylgruppe;
X gleich oder verschieden sowie repräsentiert durch NH-(CₙH₂ₙ) mit n = 1, 2, 3 oder 4 und/oder O-(CₙH₂ₙ) mit n = 1, 2, 3 oder 4 und/oder durch eine nicht vorhandene Einheit;
R² gleich oder verschieden sowie repräsentiert durch OH, SO₃H, PO₃H₂, O-PO₃H₂ und/oder para substituiertes C₆H₄-SO₃H, mit der Maßgabe, dass falls X eine nicht vorhandene Einheit ist, R² durch OH repräsentiert wird; 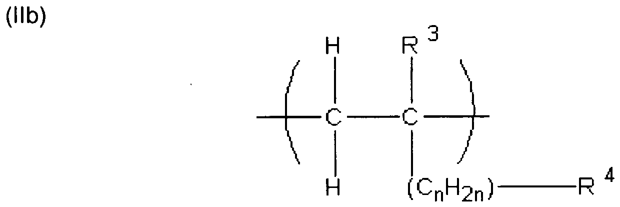 mit
R³ gleich oder verschieden sowie repräsentiert durch H und/oder eine unverzweigte oder verzweigte C₁ - C₄ Alkylgruppe;
n = 0, 1, 2, 3 oder 4
R⁴ gleich oder verschieden sowie repräsentiert durch SO₃H, PO₃H₂, O-PO₃H₂ und/oder para substituiert vorliegendes C₆H₄-SO₃H; 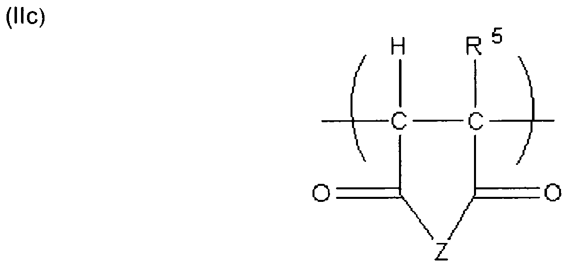 mit
R⁵ gleich oder verschieden sowie repräsentiert durch H und/oder eine unverzweigte oder verzweigte C₁ - C₄ Alkylgruppe;
Z gleich oder verschieden sowie repräsentiert durch O und/oder NH; 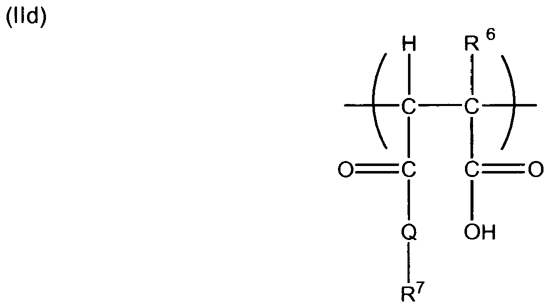 mit
R⁶ gleich oder verschieden sowie repräsentiert durch H und/oder eine unverzweigte oder verzweigte C₁ - C₄ Alkylgruppe;
Q gleich oder verschieden sowie repräsentiert durch NH und/oder O;
R⁷ gleich oder verschieden sowie repräsentiert durch H, (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und/oder (CₘH₂ₘ)ₑ-O-(A'O)_{α} -R⁹ mit m = 0, 1, 2, 3 oder 4, e = 0, 1, 2, 3 oder 4, A' = C_{x'}H₂ₓ mit x' = 2, 3, 4 oder 5 und/oder CH₂C(C₆H₅)H-, α = eine ganze Zahl von 1 bis 350 mit R⁹ gleich oder verschieden sowie repräsentiert durch eine unverzweigte oder verzweigte C₁ - C₄ Alkylgruppe.

8. Copolymer nach einem der Ansprüche 1 bis 7, **dadurch gekennzeichnet, dass** die Säure-Struktureinheit γ durch Einpolymerisation der Säuremonomere Methacrylsäure, Acrylsäure, Maleinsäure und/oder Maleinsäureanhydrid erzeugt wird.

9. Copolymer nach einem der Ansprüche 1 bis 8 in welchem mindestens 45 Mol-%, bevorzugt mindestens 80 Mol-% aller Struktureinheiten als Isoprenolpolyetherderivat-Struktureinheit α, Vinyloxypolyetherderivat-Struktureinheit β und Säure-Struktureinheit γ vorliegen.

10. Dispergiermittel enthaltend mindestens 30 Gew.-% Wasser sowie mindestens 10 Gew.-% des Copolymers gemäß einem der Ansprüche 1 bis 9.

11. Dispergiermittel nach Anspruch 10, welches in Form einer wässrigen Lösung vorliegt.

12. Verfahren zur Herstellung eines Copolymers gemäß einem der Ansprüche 1 bis 9 oder eines Dispergiermittels gemäß Anspruch 10 oder 11, **dadurch gekennzeichnet, dass** Isoprenolpolyetherderivatmonomer, Vinyloxypolyetherderivatmonomer und Säuremonomer durch radikalische Polymerisation unter Verwendung eines Peroxid enthaltenden Redoxinitiatorsystems in wässriger Lösung umgesetzt werden, wobei die Temperatur der wässrigen Lösung während der Polymerisation 10 bis 45 °C sowie der pH-Wert 3,5 bis 6,5 beträgt.

13. Verwendung eines Copolymers gemäß einem der Ansprüche 1 bis 9 als Dispergiermittel für hydraulische Bindemittel und/oder für latenthydraulische Bindemittel.

## Claims

1. Copolymer comprising:
i) 3 to 40 mol% of an isoprenolpolyether derivative structural unit α
ii) 3 to 40 mol% of a vinyloxypolyether derivative structural unit β and
iii)35 to 93 mol% of an acid structural unit γ,
the isoprenolpolyether derivative structural unit α being represented by the following general formula (Ia) 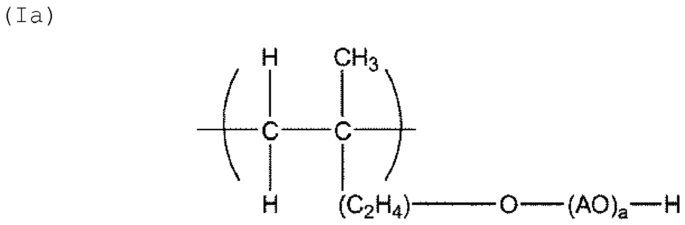 where
A are identical or different and are represented by an alkylene group according to CₓH₂ₓ where x = 2, 3, 4 or 5, and
a are identical or different and are represented by an integer between 4 and 300,
the vinyloxypolyether derivative structural unit β being represented by the following general formula (Ib) 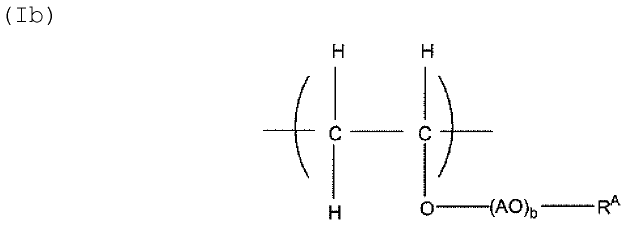 where R^{A} are identical or different and are represented by a hydrogen atom, a linear or branched C₁-C₁₂ alkyl group, C₅-C₈ cycloalkyl group, phenyl group or C₇-C₁₂ arylalkyl group,
A are identical or different and are represented by an alkylene group according to CₓH₂ₓ where x = 2, 3, 4 or 5, and
b are identical or different and are represented by an integer from 6 to 450,
the arithmetic mean of the alkylene groups A of the structural units which belong to the vinyloxypolyether derivative structural unit β being higher by at least the factor 1.5 than the arithmetic mean of the alkylene groups A of the structural units which belong to the isoprenolpolyether derivative structural unit α.

2. Copolymer according to Claim 1, **characterized in that** the arithmetic mean of the alkylene groups A of the structural units which belong to the vinyloxypolyether derivative structural unit β is higher by at least the factor 2 than the arithmetic mean of the alkylene groups A of the structural units which belong to the isoprenolpolyether derivative structural unit α.

3. Copolymer according to Claim 1 or 2, **characterized in that** a is identical or different and is represented by an integer between 5 and 70, and b is identical or different and is represented by an integer from 41 to 400.

4. Copolymer according to any of Claims 1 to 3, **characterized in that** a is identical or different and is represented by an integer between 5 and 39.

5. Copolymer according to any of Claims 1 to 4, comprising
i) 5 to 35 mol% of an isoprenolpolyether derivative structural unit α,
ii) 5 to 35 mol% of a vinyloxypolyether derivative structural unit β and
iii)50 to 90 mol% of an acid structural unit γ.

6. Copolymer according to any of Claims 1 to 5, **characterized in that** the vinyloxypolyether derivative structural unit β is produced by incorporating in the form of polymerized units alkoxylated hydroxybutyl vinyl ether which preferably has an arithmetic mean of oxyalkylene groups of 41 to 400.

7. Copolymer according to any of Claims 1 to 6, **characterized in that** the acid structural unit γ is present according to one of the general formulae (IIa), (IIb), (IIc) and/or (IId) 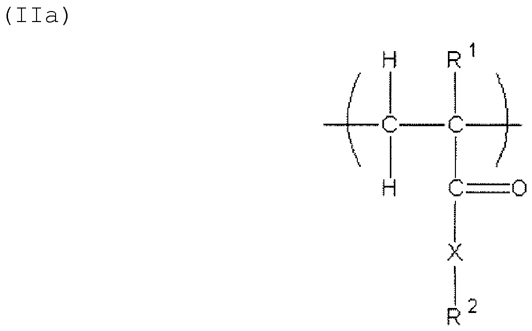 where
R¹ are identical or different and are represented by H and/or a straight-chain or a branched C₁ - C₄ alkyl group;
X are identical or different and are represented by NH-(CₙH₂ₙ) where n = 1, 2, 3 or 4 and/or O-(CₙH₂ₙ) where n = 1, 2, 3 or 4 and/or by a unit not present;
R² are identical or different and are represented by OH, SO₃H, PO₃H₂, O-PO₃H₂ and/or para-substituted C₆H₄-SO₃H, with the proviso that, if X is a unit not present, R² is represented by OH; 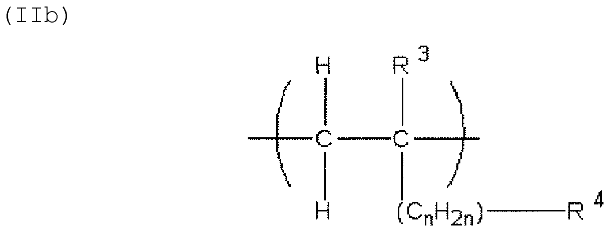 where
R³ are identical or different and are represented by H and/or a straight-chain or branched C₁ - C₄ alkyl group;
n = 0, 1, 2, 3 or 4;
R⁴ are identical or different and are represented by SO₃H, PO₃H₂, O-PO₃H₂ and/or para-substituted C₆H₄-SO₃H; 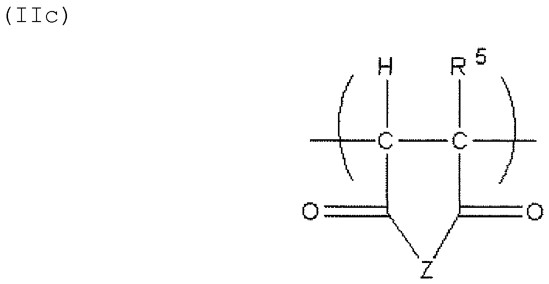 where
R⁵ are identical or different and are represented by H and/or a straight-chain or branched C₁ - C₄ alkyl group;
Z are identical or different and are represented by 0 and/or NH; 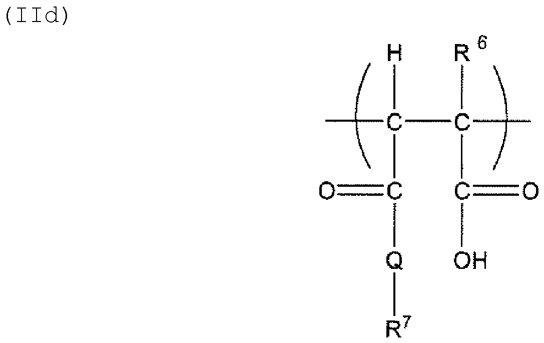 where
R⁶ are identical or different and are represented by H and/or a straight-chain or branched C₁ - C₄ alkyl group;
Q are identical or different and are represented by NH and/or 0;
R⁷ are identical or different and are represented by H, (CₙH₂ₙ)-SO₃H where n = 0, 1, 2, 3 or 4, (CₙH₂ₙ) -OH where n = 0, 1, 2, 3 or 4; (CₙH₂ₙ)-PO₃H₂ where n = 0, 1, 2, 3 or 4, (CₙH₂ₙ)-OPO₃H₂ where n= 0, 1, 2, 3 or 4, (C₆H₄)-SO₃H, (C₆H₄)-PO₃H₂, (C₆H₄)-OPO₃H₂ and/or (CₘH₂ₘ)ₑ-O-(A'O)ₐ-R⁹ where m = 0, 1, 2, 3 or 4, e = 0, 1, 2, 3 or 4, A' = C_{x'}H_{2x'} where x' = 2, 3, 4 or 5 and/or CH₂C(C₆H₅)H-, α= an integer from 1 to 350 with R⁹ identical or different and represented by a straight-chain or a branched C₁ - C₄ alkyl group.

8. Copolymer according to any of Claims 1 to 7, **characterized in that** the acid structural unit γ is produced by incorporation of the acid monomers methacrylic acid, acrylic acid, maleic acid and/or maleic anhydride in the form of polymerized units.

9. Copolymer according to any of Claims 1 to 8, in which at least 45 mol%, preferably at least 80 mol%, of all structural units are present as isoprenolpolyether derivative structural unit α, vinyloxypolyether derivative structural unit β and acid structural unit γ.

10. Dispersant containing at least 30% by weight of water and at least 10% by weight of the copolymer according to any of Claims 1 to 9.

11. Dispersant according to Claim 10, which is present in the form of an aqueous solution.

12. Process for the preparation of a copolymer according to any of Claims 1 to 9 or of a dispersant according to Claim 10 or 11, **characterized in that** isoprenolpolyether derivative monomer, vinyloxypolyether derivative monomer and acid monomer are reacted by free radical polymerization with the use of a peroxide-containing redox initiator system in aqueous solution, the temperature of the aqueous solution during the polymerization being 10 to 45°C and the pH being 3.5 to 6.5.

13. Use of a copolymer according to any of Claims 1 to 9 as a dispersant for hydraulic binders and/or for latent hydraulic binders.

## Revendications

1. Copolymère comprenant :
i) 3 à 40 % en moles d'une unité structurale dérivée d'isoprénolpolyéther α,
ii) 3 à 40 % en moles d'une unité structurale dérivée de vinyloxypolyéther β et
iii) 35 à 93 % en moles d'une unité structurale acide γ,
l'unité structurale dérivée d'isoprénolpolyéther α étant représentée par la formule générale (Ia) suivante : 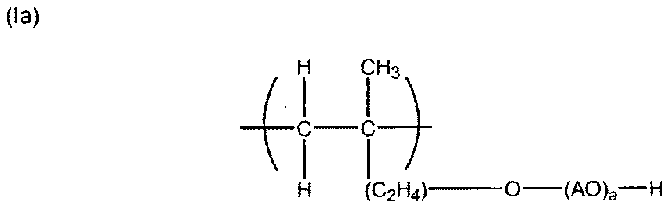 dans laquelle
les A sont identiques ou différents et représentent un groupe alkylène CₓH₂ₓ avec x = 2, 3, 4 ou 5, et
les a sont identiques ou différents et représentent un nombre entier compris entre 4 et 300,
l'unité structurale dérivée de vinyloxypolyéther β étant représentée par la formule générale (Ib) suivante : 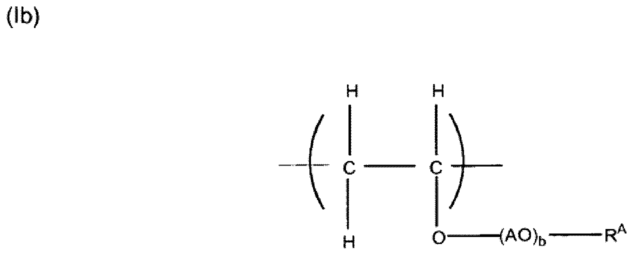 dans laquelle les R^{A} sont identiques ou différents et représentent un atome d'hydrogène, un groupe alkyle en C₁-C₁₂ linéaire ou ramifié, un groupe cycloalkyle en C₅-C₈, un groupe phényle ou un groupe arylalkyle en C₇-C₁₂, les A sont identiques ou différents et représentent un groupe alkylène CₓH₂ₓ avec x = 2, 3, 4 ou 5, et
les b sont identiques ou différents et représentent un nombre entier de 6 à 450,
la moyenne arithmétique des groupes alkylène A des unités structurales appartenant à l'unité structurale dérivée de vinyloxypolyéther β étant supérieure d'au moins un facteur de 1,5 à la moyenne arithmétique des groupes alkylène A des unités structurales appartenant à l'unité structurale dérivée d'isoprénolpolyéther α.

2. Copolymère selon la revendication 1, **caractérisé en ce que** la moyenne arithmétique des groupes alkylène A des unités structurales appartenant à l'unité structurale dérivée de vinyloxypolyéther β est supérieure d'au moins un facteur de 2 à la moyenne arithmétique des groupes alkylène A des unités structurales appartenant à l'unité structurale dérivée d'isoprénolpolyéther α.

3. Copolymère selon la revendication 1 ou 2, **caractérisé en ce que** les a sont identiques ou différents et représentent un nombre entier compris entre 5 et 70, et les b sont identiques ou différents et représentent un nombre entier de 41 à 400.

4. Copolymère selon l'une quelconque des revendications 1 à 3, **caractérisé en ce que** les a sont identiques ou différents et représentent un nombre entier compris entre 5 et 39.

5. Copolymère selon l'une quelconque des revendications 1 à 4, comprenant :
i) 5 à 35 % en moles d'une unité structurale dérivée d'isoprénolpolyéther α,
ii) 5 à 35 % en moles d'une unité structurale dérivée de vinyloxypolyéther β et
iii) 50 à 90 % en moles d'une unité structurale acide γ.

6. Copolymère selon l'une quelconque des revendications 1 à 5, **caractérisé en ce que** l'unité structurale dérivée de vinyloxypolyéther β est formée par copolymérisation d'un éther d'hydroxybutylvinyle alcoxylé qui présente de préférence une moyenne arithmétique des groupes oxyalkylène de 41 à 400.

7. Copolymère selon l'une quelconque des revendications 1 à 6, **caractérisé en ce que** l'unité structurale acide γ présente l'une quelconque des formules générales (IIa), (IIb), (IIc) et/ou (IId) 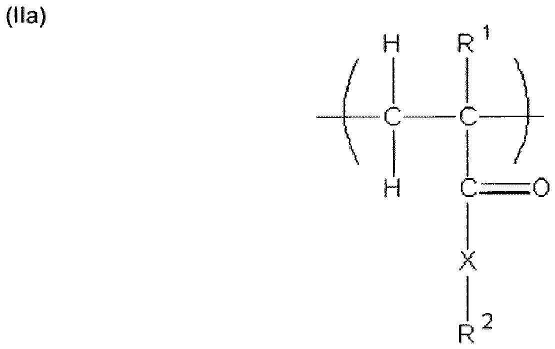 dans laquelle les R¹ sont identiques ou différents et représentent H et/ou un groupe alkyle en C₁-C₄ non ramifié ou ramifié ; les X sont identiques ou différents et représentent NH-(CₙH₂ₙ) avec n = 1, 2, 3 ou 4 et/ou O-(CₙH₂ₙ) avec n = 1, 2, 3 ou 4 et/ou une unité non présente ;
les R² sont identiques ou différents et représentent OH, SO₃H, PO₃H₂, O-PO₃H₂ et/ou C₆H₄-SO₃H para-substitué, à condition que si X est une unité non présente, R² représente OH ; 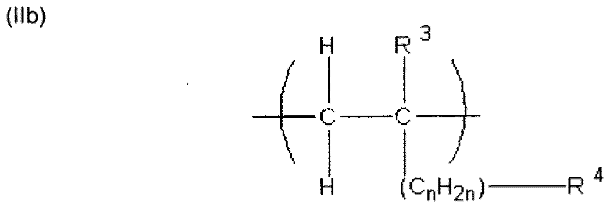 dans laquelle
les R³ sont identiques ou différents et représentent H et/ou un groupe alkyle en C₁-C₄ non ramifié ou ramifié ; n = 0, 1, 2, 3 ou 4 ;
les R⁴ sont identiques ou différents et représentent SO₃H, PO₃H₂, O-PO₃H₂ et/ou C₆H₄-SO₃H présent sous forme para-substituée ; 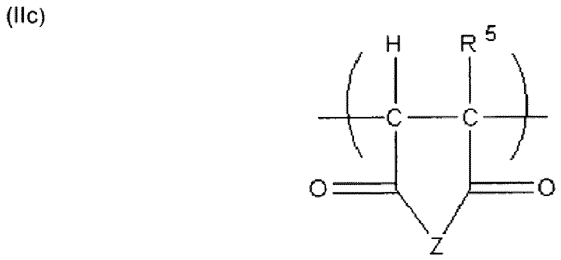 dans laquelle
les R⁵ sont identiques ou différents et représentent H et/ou un groupe alkyle en C₁-C₄ non ramifié ou ramifié ; les Z sont identiques ou différents et représentent O et/ou NH ; 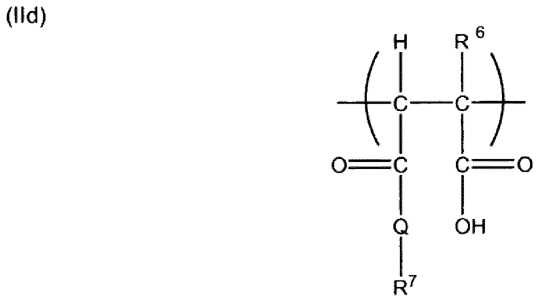 dans laquelle
les R⁶ sont identiques ou différents et représentent H et/ou un groupe alkyle en C₁-C₄ non ramifié ou ramifié ; les Q sont identiques ou différents et représentent NH et/ou O ;
les R⁷ sont identiques ou différents et représentent H, (CₙH₂ₙ)-SO₃H avec n = 0, 1, 2, 3 ou 4, (CₙH₂ₙ) -OH avec n = 0, 1, 2, 3 ou 4, (CₙH₂ₙ) -PO₃H₂ avec n = 0, 1, 2, 3 ou 4, (CₙH₂ₙ) -OPO₃H₂ avec n = 0, 1, 2, 3 ou 4, (C₆H₄) -SO₃H, (C₆H₄) -PO₃H₂, (C₆H₄) -OPO₃H₂, et/ou (CₘH₂ₘ)ₑ-O-(A'O)_{α}-R⁹ avec m = 0, 1, 2, 3 ou 4, e = 0, 1, 2, 3 ou 4, A' = C_{x'}H_{2x'} avec x' = 2, 3, 4 ou 5 et/ou CH₂C(C₆H₅)H-, α = un nombre entier de 1 à 350, les R⁹ étant identiques ou différents et représentant un groupe alkyle en C₁-C₄ non ramifié ou ramifié.

8. Copolymère selon l'une quelconque des revendications 1 à 7, **caractérisé en ce que** l'unité structurale acide γ est formée par copolymérisation des monomères acides acide méthacrylique, acide acrylique, acide maléique et/ou anhydride de l'acide maléique.

9. Copolymère selon l'une quelconque des revendications 1 à 8, dans lequel au moins 45 % en moles, de préférence au moins 80 % en moles, de toutes les unités structurales se présentent sous la forme de l'unité structurale dérivée d'isoprénolpolyéther α, l'unité structurale dérivée de vinyloxypolyéther β et l'unité structurale acide γ.

10. Agent dispersant contenant au moins 30 % en poids d'eau et au moins 10 % en poids du copolymère selon l'une quelconque des revendications 1 à 9.

11. Agent dispersant selon la revendication 10, qui se présente sous la forme d'une solution aqueuse.

12. Procédé de fabrication d'un copolymère selon l'une quelconque des revendications 1 à 9 ou d'un agent dispersant selon la revendication 10 ou 11, **caractérisé en ce qu'**un monomère dérivé d'isoprénolpolyéther, un monomère dérivé de vinyloxypolyéther et un monomère acide sont mis en réaction par polymérisation radicalaire en utilisant un système initiateur redox contenant un peroxyde en solution aqueuse, la température de la solution aqueuse pendant la polymérisation étant de 10 à 45 °C et le pH étant de 3,5 à 6,5.

13. Utilisation d'un copolymère selon l'une quelconque des revendications 1 à 9 en tant qu'agent dispersant pour liants hydrauliques et/ou pour liants hydrauliques latents.
